# EUROPÄISCHE PATENTANMELDUNG

(11) **EP 3 932 751 A1**
(43) Veröffentlichungstag der Anmeldung: **05.01.2022**
(21) Anmeldenummer: 21183405.6
(22) Anmeldetag: 02.07.2021
(51) Int. Cl.: B60R 19/56

(54) **UNTERFAHRSCHUTZ FÜR EIN FAHRZEUG MIT METALLSCHAUM IN EINEM HOHLPROFIL**

(30) Priorität: 02.07.2020 DE 102020208285
(71) Anmelder: Havel metal foam GmbH, 14774 Brandenburg an der Havel (DE)
(72) Erfinder: Schuller, Friedrich, 97342 Obernbreit (DE)
(74) Vertreter: Grünecker Patent- und Rechtsanwälte PartG mbB

(57) **Zusammenfassung**

Die Erfindung betrifft einen Unterfahrschutz (2) für ein Fahrzeug, der leicht ist und im Kollisionsfall eine möglichst große Energie durch Verformungsarbeit absorbiert, ohne zu brechen. Die Erfindung betrifft ferner ein Fahrzeug mit einem solchen Unterfahrschutz (2) sowie ein Verfahren zum Herstellen eines Unterfahrschutzes (2) für ein Fahrzeug. Gelöst wird diese Aufgabe durch einen Unterfahrschutz (2), bei dem im Hohlprofil (4) ein Metallschaum (8) angeordnet ist. Die Aufgabe wird auch gelöst durch eine Verwendung eines Hohlprofils (4), in dem sich ein Metallschaum (8) befindet, für einen Unterfahrschutz (2) eines Kraftfahrzeugs. Durch die Einbringung des Metallschaums (8) in das Hohlprofil (4) wird die Energieabsorption durch den Unterfahrschutz (2) im Kollisionsfall deutlich erhöht. Gleichzeitig stellt die Verformbarkeit des Metallschaums (8) sicher, dass der Unterfahrschutz (2) auch bei starker Verformung nicht bricht. Der Metallschaum (8) zeichnet sich dabei zusätzlich durch ein geringes Gewicht aus, so dass das Gesamtgewicht eines mit dem erfindungsgemäßen Unterfahrschutz (2) ausgestatteten Fahrzeugs allenfalls unwesentlich erhöht wird.

## Beschreibung

Die Erfindung betrifft einen Unterfahrschutz für ein Fahrzeug, ein Fahrzeug mit einem solchen Unterfahrschutz sowie ein Verfahren zum Herstellen eines Unterfahrschutzes für ein Fahrzeug. Der Unterfahrschutz weist wenigstens einen Querträger mit einem länglichen Hohlprofil auf.

Fahrzeuge, wie beispielsweise Kraftfahrzeuge und Anhänger, insbesondere große Nutzfahrzeuge, wie Lastkraftwagen und deren Anhänger, sind oftmals mit einem Unterfahrschutz versehen. Der Unterfahrschutz kann sich vorne unterhalb des Fahrgestells, hinten unterhalb des Fahrgestells und/oder seitlich zwischen einer Vorder- und einer Hinterachse erstrecken. Der Unterfahrschutz verhindert, dass sich im Kollisionsfall ein fremdes Fahrzeug unter das Fahrzeug schieben kann.

Ein Unterfahrschutz sollte leicht sein und möglichst duktile Eigenschaften aufweisen, also im Kollisionsfall eine möglichst große Energie durch Verformungsarbeit absorbieren, ohne zu brechen.

Der vorliegenden Erfindung liegt die Aufgabe zugrunde, einen solchen Unterfahrschutz zu schaffen.

Gelöst wird diese Aufgabe für den eingangs genannten Unterfahrschutz erfindungsgemäß dadurch, dass im Hohlprofil ein Metallschaum angeordnet ist.

Für das eingangs genannte Verfahren wird die Aufgabe erfindungsgemäß dadurch gelöst, dass in das Hohlprofil ein Metallschaum eingebracht wird.

Schließlich wird die Aufgabe auch gelöst durch eine Verwendung eines Hohlprofils, in dem sich ein Metallschaum befindet, für einen Unterfahrschutz eines Kraftfahrzeugs.

Durch die Einbringung des Metallschaums in das Hohlprofil wird die Energieabsorption durch den Unterfahrschutz im Kollisionsfall deutlich erhöht. Gleichzeitig stellt die Verformbarkeit des Metallschaums sicher, dass der Querträger auch bei starker Verformung nicht bricht. Der Metallschaum zeichnet sich dabei zusätzlich durch ein geringes Gewicht aus, so dass das Gesamtgewicht eines mit dem erfindungsgemäßen Unterfahrschutz ausgestatteten Fahrzeugs allenfalls unwesentlich erhöht wird.

Die erfindungsgemäße Lösung kann durch die folgenden jeweils für sich vorteilhaften und beliebig miteinander kombinierbaren Weiterbildungen nochmals verbessert werden.

So kann in einer vorteilhaften Ausgestaltung vorgesehen sein, dass das Hohlprofil und der Metallschaum einstückig miteinander verbunden sind. Das Hohlprofil und der Metallschaum bilden somit ein einziges Bauteil, das beispielsweise bei Beschädigung damit einfach auszutauschen ist. Eine Beschädigung des Unterfahrschutzes kann beispielsweise auftreten, wenn das mit dem Unterfahrschutz versehene Fahrzeug steile Rampen befahren muss.

Gemäß einer weiteren vorteilhaften Ausgestaltung können der Metallschaum und das Hohlprofil zwei separate Teile sein, die zusammengefügt und insbesondere reib- und/oder stoffschlüssig miteinander verbunden, beispielsweise verklebt oder verschweißt sind. Die Fügestellen erstrecken sich bevorzugt flächig über die gesamte oder wenigstens einen Großteil der Innenfläche des Hohlprofils und die Außenfläche des Metallschaums, um eine möglichst große spannungsübertragende Verbindung zwischen dem Metallschaum und dem Hohlprofil zu schaffen. Bevorzugt ist dabei, dass der Metallschaum und das Hohlprofil lösbar miteinander verbunden sind, so dass beispielsweise bei einer Beschädigung nur des Hohlprofils der Metallschaum wiederverwendet werden kann. Beispielsweise kann eine unter Hitze lösbare Verklebung vorgesehen sein. Dies vereinfacht auch das Recycling.

Um den Metallschaum als separates Teil herzustellen, kann eine innen mit einem Trennmittel ausgekleidete Stahlkokille ausgeschäumt und dann vom Metallschaum entfernt werden.

Gemäß einer alternativen Ausgestaltung kann das Hohlprofil mit dem Metallschaum ausgeschäumt sein. Bei dieser Variante wird der Metallschaum im Hohlprofil selbst erzeugt. Da dies bei hohen Temperaturen erfolgt, sind bei dieser Ausgestaltung der Metallschaum und das Hohlprofil metallisch miteinander verbunden. Das Hohlprofil kann aus einem Stahl-, oder einem Aluminiumblech gefertigt sein.

Der Metallschaum besteht bevorzugt aus einer Aluminiumlegierung, um das Gewicht des Unterfahrschutzes klein zu halten.

Das Hohlprofil kann in einer vorteilhaften Ausgestaltung aus wenigstens einem gekanteten Metallblech gefertigt sein. In einer besonders bevorzugten Ausgestaltung ist das Hohlprofil beispielsweise aus einem im Querschnitt U-förmigen Blechteil gefertigt sein, dessen offene Seite von einem bevorzugt planen Blech verschlossen sein kann. Auch zwei L-förmige Blechteile können vorgesehen sein. Ist das Hohlprofil aus mehreren Blechteilen gefertigt, so sind bevorzugt die Blechteile miteinander verschweißt, vernietet oder verlötet.

Das Hohlprofil ist bevorzugt ein Rechteckprofil. Es kann wenigstens eine sich in Längsrichtung des Hohlprofils bevorzugt durchgängige Sicke aufweisen. Die Sicke kann in Längsrichtung unterbrochen sein. Es können mehrere Sicken quer zur Längsrichtung nebeneinander angeordnet sein. Bevorzugt sind wenigstens zwei sich gegenüberliegende Seiten, insbesondere dessen Ober- und Unterseite, mit jeweils wenigstens einer Sicke versehen. Die Sicke ragt auf der Innenseite des Hohlprofils bevorzugt in den Metallschaum und trägt dazu bei, dessen Lage im Hohlprofil zu stabilisieren, insbesondere wenn der Metallschaum als separates Teil in das Hohlprofil eingelegt wurde.

Gemäß einer weiteren vorteilhaften Ausgestaltung ist im Metallschaum wenigstens ein stabförmiges Element eingebettet. Das stabförmige Element kann dazu dienen, dem Metallschaum eine größere strukturelle Integrität zu geben und die Energieabsorption weiter zu erhöhen.

Das stabförmige Element erstreckt sich bevorzugt über zumindest einen Großteil der Länge des Metallschaums, insbesondere jedoch über die gesamte Länge des Metallschaums, in Längsrichtung des Querträgers.

Das stabförmige Element kann nachträglich in den Metallschaum eingebracht sein. Bevorzugt ist es jedoch, wenn das stabförmige Element vom Metallschaum umschäumt ist. Dies bedeutet, dass der Metallschaum um das stabförmige Element herum erzeugt wurde. Bei einer Umschäumung besteht zwischen dem Metallschaum und dem stabförmigen Element bzw. dessen Außenfläche eine metallische Bindung.

Das stabförmige Element ist bevorzugt koaxial im Metallschaum angeordnet. Ist der Unterfahrschutz fertig montiert, so verläuft das stabförmige Element bevorzugt koaxial im Querträger bzw. im Hohlprofil.

In einer weiteren Ausgestaltung ist vorgesehen, dass das wenigstens eine stabförmige Element ein Rohr ist. Dies erlaubt eine weitere Gewichtsreduzierung ohne Einbußen in der Festigkeit und Duktilität des Querträgers. Das Rohr kann einen kreisförmigen oder polygonalen Querschnitt aufweisen. Das Rohr ist in einer weiteren Ausgestaltung nicht, zumindest nicht vollständig mit Metallschaum gefüllt. Bevorzugt ist der Innenraum des Rohrs zumindest größtenteils leer. Allerdings können sich im Innenraum des Rohrs elektrische Leitungen befinden, falls beispielsweise Leuchten am Querträger angebracht sind.

An den beiden in Längsrichtung liegenden Enden des Hohlprofils kann jeweils eine Endkappe montiert sein, die beispielsweise aus Kunststoff oder Metall gefertigt ist. Die Endkappe kann form- und/oder stoffschlüssig am Hohlprofil und/oder Metallschaum befestigt sein.

Bevorzugt erstreckt sich das Hohlprofil und/oder der Metallschaum einstückig über die gesamte Länge des Querträgers.

Der Unterfahrschutz kann, insbesondere in einer Ausgestaltung als seitlicher Unterfahrschutz, mehrere parallel verlaufende Querträger in einer der obigen Ausgestaltungen aufweisen. Das Hohlprofil und/oder der Metallschaum erstreckt sich als vorderer oder hinterer Unterfahrschutz über die gesamte Breite des Fahrzeugs. Dabei zählt eine Breite, die um bis zu 20 % kleiner als die Breite des Fahrzeugs ist, noch als gesamte Breite des Fahrzeugs.

Ferner kann der Unterfahrschutz gemäß einer weiteren vorteilhaften Ausgestaltung wenigstens einen Halter aufweisen, der am Fahrzeug, insbesondere dessen Fahrgestell, anbringbar ausgestaltet ist. Der Halter ist insbesondere ausgestaltet, den Unterfahrschutz auf einer gesetzlich vorgeschriebenen Höhe zu halten. Der Unterfahrschutz ist mit wenigstens einem Befestigungsmittel versehen, das den Halter mit dem Hohlprofil verbindet, wobei das Befestigungsmittel in den Metallschaum ragt. Als Befestigungsmittel kommt beispielsweise ein Niet wie ein Blindniet oder eine Schraube in Betracht. Der Blindniet kann in den Metallschaum ragen. Ferner kann in den Metallschaum eine Gewindehülse ragen, in die eine Befestigungsschraube eingeschraubt ist.

Im Folgenden ist die Erfindung anhand eines Ausführungsbeispiels mit Bezug auf die beigefügten Zeichnungen beispielhaft näher erläutert. Ein oben beschriebenes, beim Ausführungsbeispiel nicht vorhandenes Merkmal kann jederzeit hinzugefügt werden, wenn es bei einer bestimmten Anwendung auf den mit diesem Merkmal verknüpften technischen Effekt ankommen sollte. Umgekehrt kann ein bei dem nachstehenden Ausführungsbeispiel vorhandenes Merkmal auch weggelassen werden, wenn es bei einer bestimmten Anwendung auf den mit diesem Merkmal verknüpften technischen Effekt nicht ankommen sollte.

Der Einfachheit halber sind bei der nachstehenden Beschreibung des Ausführungsbeispiels für Elemente, die einander hinsichtlich Funktion und/oder Aufbau entsprechen, dieselben Bezugszeichen verwendet.

Es zeigen:
- Fig. 1: eine schematische Darstellung eines Fahrzeugs mit einem Unterfahrschutz;
- Fig. 2: eine schematische perspektivische Explosionsdarstellung eines Unterfahrschutzes;
- Fig. 3: eine schematische Seitenansicht des Unterfahrschutzes der Fig. 2;
- Fig. 4: ein Detail IV der Fig. 3.

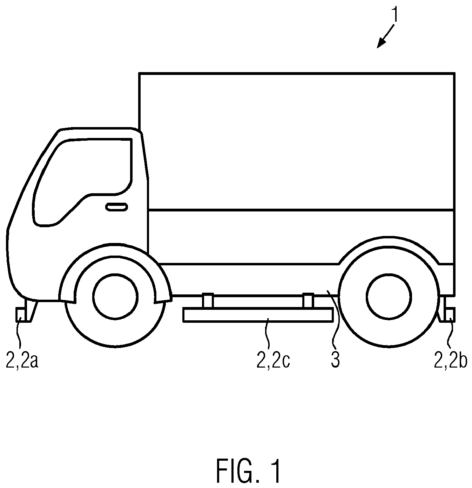

Fig. 1 zeigt ein Fahrzeug 1, das mit einem Unterfahrschutz 2 versehen ist. Das Fahrzeug 1 kann, wie dargestellt, ein Kraftfahrzeug, insbesondere ein Nutzfahrzeug sein. Alternativ kann das Fahrzeug 1 auch ein Anhänger (nicht dargestellt) sein.

Der Unterfahrschutz 2 kann als ein vorderer Unterfahrschutz 2a, ein hinterer Unterfahrschutz 2b und/oder als seitlicher Unterfahrschutz 2c vorhanden sein. Der Unterfahrschutz verhindert, dass sich ein auffahrendes fremdes Fahrzeug im Kollisionsfall unter das Fahrzeug 1 schieben kann. Der Unterfahrschutz 2 ist an einem Fahrgestell 3 des Fahrzeugs 1 befestigt.

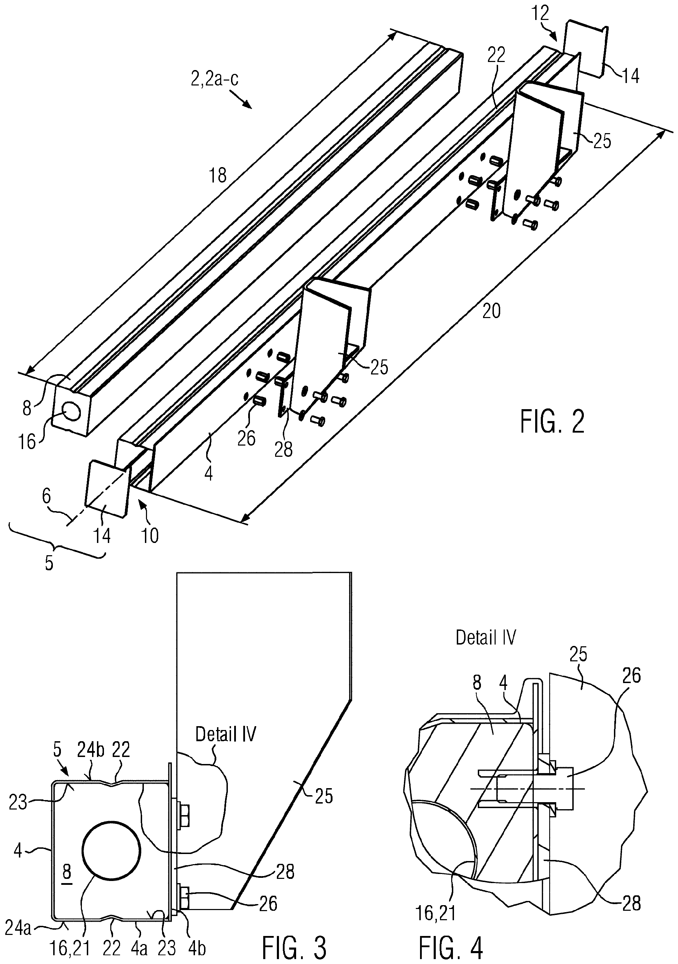

Fig. 2 zeigt, dass der Unterfahrschutz 2, bei dem es sich um einen vorderen 2a, hinteren 2b oder seitlichen 2c Unterfahrschutz 2 handeln kann, insbesondere wie folgt aufgebaut ist. Der Unterfahrschutz 2 weist ein längliches Hohlprofil 4 auf. Das Hohlprofil 4 bildet einen Querträger 5 des Unterfahrschutzes 2. Bei einem vorderen 2a oder hinteren 2b Unterfahrschutz erstreckt sich eine Längsachse 6 des Hohlprofils 4 bzw. Querträgers 5 in Breitenrichtung des Fahrzeugs 1 (Fig. 1); bei einem seitlichen Unterfahrschutz 2c erstreckt sich die Längsachse 6 des Hohlprofils 4 in eine Längsrichtung des Fahrzeugs 1, also parallel zur Fahrtrichtung.

Das Hohlprofil 4 kann aus einem oder mehreren Metallblechen, insbesondere Stahlblechen, gefertigt sein. Das Hohlprofil kann auch einstückig gezogen, stranggepresst oder gewalzt sein. Im Hohlprofil 4 ist ein Metallschaum 8 angeordnet. Der Metallschaum 8 besteht bevorzugt aus einer Aluminiumlegierung. Das Hohlprofil 4 und der Metallschaum 8 sind bevorzugt zwei separate, zusammengefügte Teile. Der Metallschaum 8 bildet folglich einen separat gefertigten Körper, der in das Hohlprofil 4 eingelegt ist. Der Metallschaum 8 kann mit dem Hohlprofil 4 zusammengefügt, beispielsweise verklebt oder verschweißt sein.

Alternativ kann das Hohlprofil 4 auch mit dem Metallschaum 8 ausgeschäumt sein. In diesem Fall ist der Metallschaum 8 nicht separat vom Hohlprofil 4, sondern im Hohlprofil 4 erzeugt worden. Aufgrund der bei der Aufschäumung benötigten Hitze verbindet sich bei dem Ausschäumen des Hohlprofils 4 der Metallschaum 8 mit dem Hohlprofil 4. Insbesondere werden zwischen dem Metallschaum 8 und dem Hohlprofil 4 beim Ausschäumen metallurgische Bindungen erzeugt, anhand derer das Ausschäumen des Hohlprofils 4 nachweisbar ist.

An den in Richtung der Längsachse 6 liegenden Enden 10, 12 des Hohlprofils 4 ist jeweils eine Kappe 14 angebracht. Die Kappen 14 können aus Kunststoff oder einem Metallblech gefertigt sein. Die Endkappen 14 können formschlüssig am Hohlprofil 4 angebracht, beispielsweise angeclipst, oder mit dem Hohlprofil 4 stoffschlüssig verbunden sein.

Im Metallschaum 8 kann ein stabförmiges Element 16 eingebettet sein. Das stabförmige Element 16 ist insbesondere koaxial im Metallschaum 8 angeordnet.

Das stabförmige Element 16 kann vom Metallschaum 8 umschäumt sein. Bei diesem Aufbau ist der Metallschaum 8 um das stabförmige Element 16 entstanden. Zwischen dem stabförmigen Element 16 und dem Metallschaum 8 besteht eine metallische Verbindung.

Alternativ kann das stabförmige Element 16 auch nachträglich in den Metallschaum 8 eingefügt sein.

Der Metallschaum 8 und das stabförmige Element 16 bilden zusammen eine Einheit. Falls das Hohlprofil 4 ausgeschäumt ist, wurde vor dem Ausschäumen das stabförmige Element 16 in das Hohlprofil 4 eingelegt, so dass der Metallschaum 8 sowohl mit dem Hohlprofil 4 als auch mit dem stabförmigen Element 16 metallisch verbunden ist und mit diesem eine Baueinheit bildet.

Das stabförmige Element 16 erstreckt sich insbesondere ununterbrochen über zumindest einen Großteil der Länge 18 des Metallschaums 8, bevorzugt über die gesamte Länge 18 des Metallschaums 8. Die Länge 18 des Metallschaums 8 ist dabei wenigstens in etwa so groß wie die Länge 20 des Hohlprofils 4. Auch der Metallschaum 8 weist bevorzugt keinerlei Unterbrechungen in Richtung der Längsachse 6 auf. Dabei zählt als genauso groß auch, dass der Metallschaum 8 geringfügig kürzer ist als das Hohlprofil 4, damit Platz für die Endkappen 14 an den Enden 10, 12 des Hohlprofils vorhanden ist.

Befindet sich der Metallschaum 8 im Hohlprofil 4, so ist das stabförmige Element 16 bevorzugt auch koaxial zum Hohlprofil 4 bzw. zur Längsachse 6 angeordnet.

Das stabförmige Element 16 kann ein Rohr 21 mit insbesondere kreisförmigen Querschnitt, aber auch ein Hohlprofil mit polygonalem Querschnitt sein.

Bevorzugt ist das Rohr 21 nicht, zumindest aber nicht vollständig mit Metallschaum gefüllt. Insbesondere ist das Rohr 21 zumindest größtenteils, bevorzugt aber vollständig innen leer.

In einer Variante zu dem in Fig. 2 dargestellten Ausführungsbeispiel können im Metallschaum 8 auch mehrere stabförmige Elemente 16 eingebettet sein.

Insbesondere in der Seitenansicht der Fig. 3 ist zu erkennen, dass das Hohlprofil 4 mit einer in Längsrichtung verlaufenden Sicke 22 versehen ist, die sich bevorzugt durchgängig von dem einen Ende 10 zu dem anderen Ende 12 erstreckt. Alternativ kann die Sicke 22 auch in Richtung der Längsachse 6 ein- oder mehrmals unterbrochen sein. Es können auch mehrere Sicken 22 quer zur Längsrichtung 6 nebeneinanderliegend vorhanden sein. Eine Sicke 22 kann als eine sich parallel zur Längsachse 6 erstreckende Vertiefung, die beispielsweise einen U- oder V-förmigen Querschnitt aufweist, ausgebildet sein. Auf einer Innenseite 23 des Hohlprofils 4 ragt die Sicke 22 bevorzugt in den Metallschaum 8.

Die Sicke 22 stellt insbesondere bei einer Ausgestaltung, in der der Metallschaum 8, gegebenenfalls mit eingebettetem stabförmigen Element 16, ein separates, mit dem Hohlprofil 4 zusammengefügtes Teil ist, eine stabilere Verbindung zwischen dem Metallschaum 8 und dem Hohlprofil 4 sicher. Insbesondere ist wenigstens eine Sicke 22 auf einer Unterseite 24a und/oder einer Oberseite 24b des Hohlprofils 4 angeordnet.

Bei dem in Fig. 3 dargestellten Ausführungsbeispiel ist zu erkennen, dass das Hohlprofil 4 aus einem U-förmigen Teil 4a und einem flachen Blechstreifen 4b als zweiten Teil aufgebaut ist. Das zweite Teil 4b verschließt fahrzeugseitig das Hohlprofil 4 und ist mit dem U-förmigen Teil 4a verschweißt. Dieser Aufbau erleichtert es, den Metallschaum 8 in das Teil 4a einzulegen und dort zu befestigen.

Der Unterfahrschutz 2 kann einen oder mehrere Halter 25 aufweisen, mit denen er am Fahrzeug 1, insbesondere an dessen Fahrgestell 3 in einer vorbestimmten, insbesondere gesetzlich vorgeschriebenen Höhe angebracht ist. Die Halter 25 sind bevorzugt aus umgeformten Metallblechen gefertigt. Der Querträger 5 ist über Befestigungselemente 26 an einem am Halter 25 angebrachten, beispielsweise angeschweißten Flansch 28 befestigt. Natürlich kann der Querträger 5 auch direkt an einem Halter 25 angebracht sein. Als Befestigungsmittel 26 können Schrauben oder Blindnieten zum Einsatz kommen.

Das Befestigungsmittel 26 erstreckt sich zum Teil in den Metallschaum 8. Beispielsweise kann in dem Metallschaum 8 eine Gewindehülse eingebracht sein, falls es sich bei dem Befestigungsmittel 26 um eine Schraube handelt. Wird als Befestigungsmittel 26 ein Blindniet verwendet, so erstreckt sich auch dieser zum Teil in den Metallschaum.

### Bezugszeichen

- 1: Fahrzeug
- 2: Unterfahrschutz
- 2a: vorderer Unterfahrschutz
- 2b: hinterer Unterfahrschutz
- 2c: seitlicher Unterfahrschutz
- 3: Karosserie
- 4: Hohlprofil
- 4a: ein Teil des Hohlprofils
- 4b: ein anderes Teil des Hohlprofils
- 5: Querträger
- 6: Längsachse
- 8: Metallschaum
- 10: ein Ende des Hohlprofils
- 12: anderes Ende des Hohlprofils
- 14: Endkappe
- 16: stabförmiges Element
- 18: Länge des Metallschaums
- 20: Länge des Hohlprofils
- 21: Rohr
- 22: Sicke
- 23: Innenseite
- 24a: Unterseite des Hohlprofils
- 24b: Oberseite des Hohlprofils
- 25: Träger
- 26: Befestigungsmittel
- 28: Flansch

## Patentansprüche

1. Unterfahrschutz (2) für ein Fahrzeug, wobei der Unterfahrschutz (2) wenigstens einen Querträger (5) mit einem länglichen Hohlprofil (4) aufweist, **dadurch gekennzeichnet, dass** im Hohlprofil (4) ein Metallschaum (8) angeordnet ist.

2. Unterfahrschutz (2) nach Anspruch 1, **dadurch gekennzeichnet, dass** der Metallschaum (8) und das Hohlprofil (4) einstückig miteinander verbunden sind.

3. Unterfahrschutz (2) nach Anspruch 2, **dadurch gekennzeichnet, dass** der Metallschaum (8) und das Hohlprofil (4) zwei separate, einstückig zusammengefügte Teile sind.

4. Unterfahrschutz (2) nach Anspruch 3, **dadurch gekennzeichnet, dass** der Metallschaum (8) in das Hohlprofil (4) eingeklebt ist.

5. Unterfahrschutz (2) nach einem der Ansprüche 1 bis 4, **dadurch gekennzeichnet, dass** im Metallschaum (8) wenigstens ein stabförmiges Element (16) eingebettet ist.

6. Unterfahrschutz (2) nach Anspruch 5, **dadurch gekennzeichnet, dass** das stabförmige Element (16) sich über zumindest einen Großteil der Länge (18) des Metallschaums (8) erstreckt.

7. Unterfahrschutz (2) nach Anspruch 5 oder 6, **dadurch gekennzeichnet, dass** das stabförmige Element (16) vom Metallschaum (8) umschäumt ist.

8. Unterfahrschutz (2) nach einem der Ansprüche 5 bis 7, **dadurch gekennzeichnet, dass** das stabförmige Element (16) koaxial zu einer Längsachse (6) des Hohlprofils (4) und/oder des Metallschaums (8) angeordnet ist.

9. Unterfahrschutz (2) nach einem der Ansprüche 5 bis 8, **dadurch gekennzeichnet, dass** das wenigstens eine stabförmige Element (16) ein Rohr (17) ist, wobei das Rohr (17) vorzugsweise zumindest nicht vollständig mit einem Metallschaum gefüllt ist.

10. Unterfahrschutz (2) nach Anspruch 9, **dadurch gekennzeichnet, dass** das Rohr (17) zumindest größtenteils leer ist.

11. Unterfahrschutz (2) nach einem der Ansprüche 1 bis 10, **dadurch gekennzeichnet, dass** das Hohlprofil (4) an wenigstens einer Seite mit wenigstens einer sich entlang des Hohlprofils (4) erstreckenden Sicke (22) versehen ist.

12. Unterfahrschutz (2) nach einem der Ansprüche 1 bis 11, **dadurch gekennzeichnet, dass** der Unterfahrschutz (2) wenigstens einen Halter (25) aufweist, der am Fahrzeug (1) anbringbar ausgestaltet ist, dass wenigstens ein Befestigungsmittel (26) vorgesehen ist, das den Halter (25) mit dem Hohlprofil (4) verbindet, und dass das Befestigungsmittel (26) in den Metallschaum (8) ragt.

13. Fahrzeug (1) mit einem vorderen (2a), hinteren (2b) und/oder seitlichen (2c) Unterfahrschutz (2), **dadurch gekennzeichnet, dass** der Unterfahrschutz (2, 2a, 2b, 2c) nach einem der Ansprüche 1 bis 12 ausgestaltet ist.

14. Verfahren zum Herstellen eines Unterfahrschutzes (2) für ein Fahrzeug (1), wobei der Unterfahrschutz (2) wenigstens einen Querträger (5) mit einem Hohlprofil (4) aufweist, **dadurch gekennzeichnet, dass** in das Hohlprofil (4) ein Metallschaum (8) eingebracht wird.

15. Verwendung eines Hohlprofils (4), in dem sich ein Metallschaum (8) befindet, für eine vorderen (2a), hinteren (2b) und/oder seitlichen (2c) Unterfahrschutz eines Fahrzeugs (1).
